Europäisches Patentamt

(19) European Patent Office

Office européen des brevets

(11) Veröffentlichungsnummer: **0 101 839**
A1

(12) **EUROPÄISCHE PATENTANMELDUNG**

(21) Anmeldenummer: 83106604.8

(22) Anmeldetag: 06.07.83

(51) Int. Cl.³: **B 23 D 55/08**
A 22 B 5/00, B 27 B 13/06

(30) Priorität: 22.07.82 DE 3227399

(43) Veröffentlichungstag der Anmeldung:
07.03.84 Patentblatt 84/10

(84) Benannte Vertragsstaaten:
AT BE CH DE FR GB IT LI NL SE

(71) Anmelder: REICH Spezialmaschinen GmbH
Postfach 1803 Plochinger Strasse 65
D-7440 Nürtingen(DE)

(72) Erfinder: Binder, Werner
Pilsener Strasse 53
D-7000 Stuttgart 80(DE)

(72) Erfinder: Gresser, Gerhard
Zeisslerstrasse 5
D-7446 Oberboihingen(DE)

(72) Erfinder: Dettelbach, Alfred
Rosmarinweg 27
D-7000 Stuttgart 50(DE)

(54) **Laufrad für Bandsägen.**

(57) Bei Laufrädern (2) für Bandsägen, insbesondere zum Sägen von Fleisch und Knochen, wird die Lauffläche (4) sehr rasch durch Fett, Knochenmehl usw. verschmutzt, was sich sehr nachteilig auf die Kraftübertragung und Führung des Bandsägeblatts (3) auswirkt. Die Lauffläche (4) weist daher nach den Seitenflächen (5) des Laufrads (2) offene Durchbrüche (7) auf, in die Fett und Schmutz vom Bandsägeblatt (3) hineingedrückt und vom umlaufenden Laufrad (2) weggeschleudert wird. Damit ist ein sicherer Betrieb der Bandsäge gewährleistet.

FIG.1

EP 0 101 839 A1

Croydon Printing Company Ltd

Karl M. Reich, Maschinenfabrik GmbH, 7440 Nürtingen

Laufrad für Bandsägen

Die Erfindung betrifft ein Laufrad für Bandsägen, insbesondere zum Sägen von Fleisch und Knochen, an dessen Lauffläche das Bandsägeblatt geführt ist.

Die Laufflächen der bekannten Laufräder werden mit umlaufenden Nuten oder Umfangsrillen versehen, um die Führung des Bandsägeblatts zu verbessern.

Insbesondere beim Sägen von Fleisch und Knochen erfolgt nämlich eine starke Verschmutzung durch Fett, Knochenmehl und ähnlichen Stoffen an der Lauffläche der Laufräder, was sich dann sehr nachteilig auf die Kraftübertragung und Führung des Bandsägeblatts auswirkt. Das an der Lauffläche anhaftende Fett vermindert nämlich die Reibung zwischen Lauffläche und Bandsägeblatt, außerdem baut sich die Verschmutzung auf der Lauffläche in kurzer Zeit so stark auf, daß das Bandsägeblatt vom Laufrad abläuft.

Die umlaufenden Umfangsrillen sollen diese Nachteile vermeiden, der anhaftende Schmutz muß jedoch durch zusätzliche Abstreifer, die sowohl die Lauffläche als auch die Rillen reinigen, beseitigt werden.

Diese Maßnahme ist aufwendig, die Radabstreifer sind Verschleißteile und müssen ständig auf ihre einwandfreie Funktion überprüft werden.

...

-2-

Der Erfindung liegt daher die Aufgabe zugrunde, ein Laufrad der eingangs genannten Art zu schaffen, auf dessen Lauffläche sich Fett und Schmutz nicht festsetzen können.

Diese Aufgabe wird dadurch gelöst, daß die Lauffläche nach den Seitenflächen offene Durchbrüche aufweist.

Bildet sich jetzt Schmutz zwischen Lauffläche und Bandsägeblatt, dann wird dieser vom Bandsägeblatt in die Durchbrüche hineingedrückt. Durch die schräg nach außen hin verlaufende Form der Durchbrüche wird der Schmutz ständig nachgeschoben, bis er vom umlaufenden Laufrad weggeschleudert wird.

In gleicher Weise wird die auf der Lauffläche anhaftende Fettschicht vom Bandsägeblatt weggequetscht, so daß eine gute Haftung zwischen Lauffläche und Bandsägeblatt zustande kommt.

Das erfindungsgemäße Laufrad weist also ohne zusätzliche Abstreifer einen besonders vorteilhaften Selbstreinigungseffekt auf und gewährleistet einen sicheren Betrieb der Bandsäge.

Das erfindungsgemäße Laufrad läßt sich natürlich nicht nur bei Fleisch- und Knochenbandsägen, sondern bei allen Bandsägen anwenden, bei denen eine Gefahr des Verschmutzens der Laufflächen auftritt.

Im folgenden ist ein Ausführungsbeispiel der Erfindung unter Bezugnahme auf die Zeichnungen näher beschrieben.

Es zeigen:

Fig. 1    Teilansicht einer Bandsäge mit oberem Laufrad, von vorne.

Fig. 2    Laufrad von der Seite, teilweise geschnitten nach Linie II - II in Fig. 1.

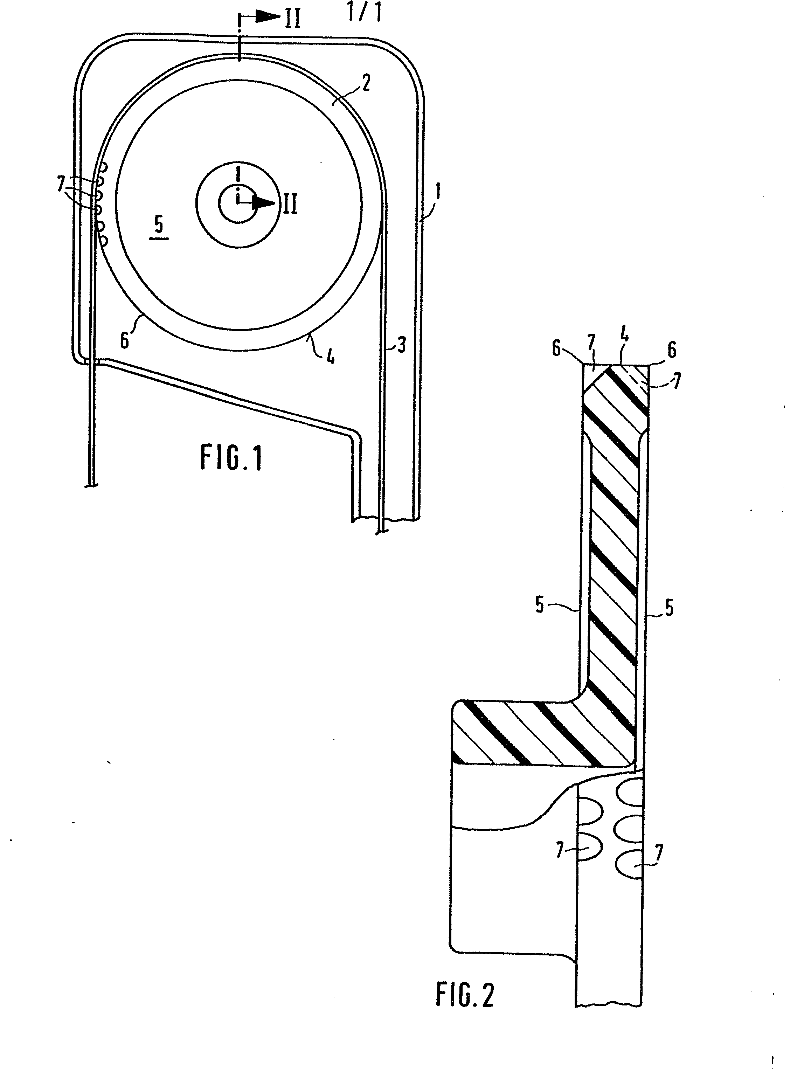

In Fig. 1 ist der obere Teil einer Bandsäge dargestellt, in dessen Gehäuse 1 das obere Laufrad 2 frei drehbar gelagert ist. Die folgenden Ausführungen gelten dabei auch für das nicht dargestellte antreibbare untere Laufrad. Laufrad 2 dient zur Führung eines Bandsägeblatts 3 und ist dazu nach Art einer Scheibe mit einer Lauffläche 4 und den beiden Seitenflächen 5 versehen (siehe auch Fig. 2), die sich an den Kanten 6 treffen.

Wie besonders Fig. 2 zeigt, sind diese Kanten 6 durch Durchbrüche in Form von schrägen Nuten 7 unterbrochen, die einen annähernd halbkreisförmigen Querschnitt aufweisen und sich von der Lauffläche 4 zu den Seitenflächen 5 erstrecken.

Die Nuten 7 erstrecken sich nahezu bis zum Mittelkreis der Lauffläche 4 und die sich nach den gegenüberliegenden Seitenflächen 5 gerichteten Nuten 7 sind versetzt gegeneinander angeordnet. Dadurch ergibt sich eine optimale Abführung von Fett und Schmutz, wobei jedoch die Führung des Bandsägeblatts 3 nach wie vor gewährleistet ist.

...

- 4 -

Ist das Laufrad 2 vorteilhafterweise aus Kunststoff, z. B. aus Polyamid, gefertigt, dann lassen sich die Nuten beim Spritzen in einem Arbeitsgang anbringen, was eine einfache und billige Fertigung ermöglicht.

Reg.-Nr. 4.08
0101839
20. Juli 1982

PATENTANSPRÜCHE

1) Laufrad für Bandsägen, insbesondere zum Sägen von
   Fleisch und Knochen, an dessen
   Lauffläche das Bandsägeblatt geführt ist,
   d a d u r c h   g e k e n n z e i c h n e t , daß
   die Lauffläche (4) nach den Seitenflächen (5) offene
   Durchbrüche (7) aufweist.

2) Laufrad nach Anspruch 1,   d a d u r c h
   g e k e n n z e i c h n e t , daß die Durchbrüche
   als schräge Nuten (7) ausgebildet sind, die die Kanten (6)
   zwischen Lauffläche (4) und Seitenfläche (5) unterbrechen.

3) Laufrad nach Anspruch 2,   d a d u r c h
   g e k e n n z e i c h n e t , daß die nach den beiden Seitenflächen (5) gerichtete Nuten (7) versetzt
   gegeneinander angeordnet sind.

FIG.1

FIG.2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 363 495 (TURNBULL)<br>* Anspruch 1; Spalte 4, Zeilen 65-75; Spalte 5, Zeilen 14-24; Figuren 5, 6 * | 1 | B 23 D 55/08<br>A 22 B 5/00<br>B 27 B 13/06 |
| | --- | | |
| Y | US-A-2 865 412 (CRANE)<br>* Spalte 1, Zeile 50 - Spalte 2, Zeile 5; Figuren 2-4 * | 1 | |
| | --- | | |
| A | US-A-3 034 387 (SEBASTIAN)<br>* Spalte 1, Zeilen 9-46; Figuren 2, 3 * | 1 | |
| | --- | | |
| A | DE-U-6 806 334 (K. POSTMEIER)<br>* Ansprüche 1, 2 * | 1 | RECHERCHIERTE SACHGEBIETE (Int. Cl. ³) |
| | --- | | |
| A | US-A-2 585 957 (MEEKER et al.)<br>* Spalte 9, Zeile 9 - Spalte 10, Zeile 2; Figur 13 * | 1 | |
| | ----- | | A 22 B 5/00<br>B 23 D 55/00<br>B 23 D 59/00<br>B 27 B 13/00 |

Der vorliegende Recherchenbericht wurde für alle Patentansprüche erstellt.

| Recherchenort | Abschlußdatum der Recherche | Prüfer |
|---|---|---|
| BERLIN | 17-10-1983 | MARTIN A E W |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82